# EUROPEAN PATENT APPLICATION

(11) **EP 2 408 157 A1**
(43) Date of publication of application: **18.01.2012**
(21) Application number: 09842536.6
(22) Date of filing: 30.12.2009
(51) Int. Cl.: H04L 12/64

(54) **METHOD AND SYSTEM FOR TRANSMITTING LARGE MESSAGE MODE CONVERGED IP MESSAGES**

(30) Priority: 03.04.2009 CN 200910130369
(71) Applicant: ZTE Corporation, Shenzhen, Guangdong 518057 (CN)
(72) Inventor: LU, Yan, Guangdong 518057 (CN); ALI, Ghazanfar, Guangdong 518057 (CN)
(74) Representative: Tomlinson, Kerry John
(86) International application number: PCT/CN2009/076281
(87) International publication number: WO 2010/111880

(57) **Abstract**

The present invention discloses a method and system for transmitting a large message mode Converged IP Messaging (CPM) message, wherein the method comprises the following steps that: when sending a large message mode CPM message to a CPM client of a receiver, a CPM client of a sender sends a session invitation message to the CPM client of the receiver and negotiates with the CPM client of the receiver to determine a media transmission link between the CPM client of the sender and the CPM client of the receiver; the CPM client of the sender sends the content of the large message mode CPM message to the CPM client of the receiver via the determined media transmission link; and the CPM client of the sender or the CPM client of the receiver initiates a flow to end the session of the large message mode CPM message. The present invention realizes the transmission of a large message mode CPM message.

## Description

### TECHNICAL FIELD

The present invention relates to the technical field of mobile communications, and in particular to a method and system for transmitting large message mode Converged IP Messaging (CPM).

### BACKGROUND

The CPM has been proposed by Open Mobile Architecture (OMA) in 2005 to achieve the intercommunication of various types of message services and provide a uniform message service and a perfect, consistent and convenient message service experience. The CPM converges multiple existing message services, including Instant Message (IM), Push-To-Talk over Cellular (POC), Mobile E-Email (MEM), Short Messaging Service (SMS), and Multimedia Messaging Service (MMS) and the like.

The OMA is currently formulating a CPM V1.0 specification. The service forms of the CPM include: CPM messages based on a pager mode, large message mode CPM messages based on a session mode, and other session-based CPM session services. Before using such services, a subscriber needs to register on and log in a CPM system, that is, to be 'online'.

A Session Initiation Protocol (SIP) message is used to transmit a pager-mode message between a CPM enabler and the CPM clients of a CPM message receiver and a CPM message sender, however, the SIP message cannot be used by a sending terminal to send a large message mode CPM message whose size is beyond a limit (e.g. 1300 bytes).

At present, there has proposed no transmission solution for a large message mode CPM message, and as a consequence, a large message mode CPM message cannot be transmitted between two clients in a CPM system.

### SUMMARY

On this ground, the present invention provides transmission solutions for a large message mode CPM message to address the problem that a large message mode CPM message can not be transmitted in the prior art.

In accordance with an aspect of the present invention, there is provided a method for transmitting a large message mode CPM message.

In accordance with the present invention, the method for transmitting a large message mode CPM message comprises: when sending a large message mode CPM message to a CPM client of a receiver, a CPM client of a sender sends a first session invitation message of the large message mode CPM message via a first SIP/IP core network to which the sender belongs, and the first session invitation message is received by a first participating function entity to which the sender belongs; the first participating function entity sends a second session invitation message via the first SIP/IP core network and a second SIP/IP core network to which the receiver belongs, and the second session invitation message is received by a second participating function entity to which the receiver belongs; the second participating function entity sends a third session invitation message via the second SIP/IP core network, and the third session invitation message is received by the CPM client of the receiver; the CPM client of the receiver negotiates with the CPM client of the sender to determine a media transmission link between the CPM client of the sender and the CPM client of the receiver; the CPM client of the sender sends content of the large message mode CPM message to the CPM client of the receiver via the determined media transmission link; and the CPM client of the sender or the CPM client of the receiver initiates a flow to end the session of the large message mode CPM message.

In accordance with another aspect of the present invention, there is provided a system for transmitting a large message mode CPM message, which comprises a CPM client of a sender and a CPM client of a receiver, wherein the CPM client of the sender is arranged for establishing a media transmission link with the CPM client of the receiver via a session invitation of a large message mode CPM message and sending content of the large message mode CPM message to the CPM client of the receiver via the media transmission link; and the CPM client of the receiver is arranged for receiving the session invitation of the large message mode CPM message, establishing a media transmission link according to the session invitation, and receiving the content of the large message mode CPM message sent by the CPM client of the sender via the media transmission link.

By means of at least one of the solutions above, when sending a large message mode CPM message to a CPM client of a receiver, a CPM client of a sender first sends a session invitation of the large message mode CPM message, then negotiates with the CPM client of the receiver to establish a media transmission link, and finally sends the content of the large message mode CPM message to the CPM client of the receiver via the established media transmission link, therefore, the problem in the prior art that a large message mode CPM message cannot be transmitted is solved and the user experience is consequentially improved.

Additional features and advantages of the invention will be set forth in the description which follows, and in part will be apparent from the description, or may be learned by practice of the invention. The object and other advantages of the present invention can be realized by and obtained from the structures especially illustrated in the specification, claims and the accompanying drawings.

### BRIEF DESCRIPTION OF THE DRAWINGS

As one part of the specification, the following accompanying drawings are provided to make the invention understood better and to explain the invention in combination with embodiments of the invention but not to limit the invention. In the accompanying drawings:
Fig. 1 is a flow chart of a method for transmitting a CPM message according to an embodiment of the present invention;
Fig. 2 is a flow chart of sending a session invitation message from a CPM client of a sender to a CPM client of a receiver according to an embodiment of the present invention;
Fig. 3 is a flow chart of a method for determining a media transmission link between a CPM client of a sender and a CPM client of a receiver according to an embodiment of the present invention;
Fig. 4 is a flow chart of another method for determining a media transmission link between a CPM client of a sender and a CPM client of a receiver according to an embodiment of the present invention;
Fig. 5 is a flow chart of still another method for determining a media transmission link between a CPM client of a sender and a CPM client of a receiver according to an embodiment of the present invention;
Fig. 6 is a flow chart of the sending of the content of a large message mode CPM message to a CPM client of a receiver according to an embodiment of the present invention;
Fig. 7 is a flow chart of the initiation of a session ending flow by a CPM client of a sender according to an embodiment of the present invention;
Fig. 8 is a flow chart of the initiation of a session ending flow by a CPM client of a receiver according to an embodiment of the present invention;
Fig. 9 is a flow chart of Embodiment 1;
Fig. 10 is a flow chart of Embodiment 2;
Fig. 11 is a flow chart of Embodiment 3;
Fig. 12 is a schematic diagram illustrating the structure of a system for transmitting a large message mode CPM message according to an embodiment of the present invention;
Fig. 13 is a schematic diagram illustrating the structure of a system for transmitting a large message mode CPM message according to a preferred embodiment of the present invention; and
Fig. 14 is a schematic diagram illustrating the structure of another system for transmitting a large message mode CPM message according to an embodiment of the present invention.

### DETAILED DESCRIPTION OF THE INVENTION

### Function Overview

A large message mode CPM message occupies a large space and therefore cannot be directly included in an SIP message, and the transmission mode of a large message mode CPM message is different from that of a pager-mode CPM message. The transmission path of a large message mode CPM message is divided into a signaling path and a media path, that is, a signaling is transmitted via the signaling path and media are transmitted via the media path, therefore, in the embodiments of the present invention, when sending a large message mode CPM message, a CPM client of a sender first carries out a media negotiation using a session invitation (INVITE) of the large message mode CPM message to establish a media transmission link with a CPM client of a receiver, and then sends a message body, that is, the message content, through the established media transmission link using a Message Session Relay Protocol (MSRP).

It should be noted that the large message mode CPM message mentioned in the embodiments of the present invention refers to a CPM message defined in a CPM specification regulated by OMA with a size beyond a predetermined limit (e.g. 300KB) which cannot be directly included in an SIP message.

The embodiments of the present invention and the features thereof can be combined with each other if no conflict is caused.

The preferred embodiments of the invention are illustrated below in combination with accompanying drawings, and it should be appreciated that the preferred embodiments herein are only for illustrating and explaining the invention but not for limiting the invention.

### Method Embodiments

In accordance with an embodiment of the present invention, there is first provided a method for transmitting a CPM message, which comprises the following steps that: when sending a large message mode CPM message to a CPM client of a receiver, a CPM client of a sender sends a first session invitation message of the large message mode CPM message via a first SIP/IP core network to which the sender belongs, and the first session invitation message is received by a first participating function entity to which the sender belongs; the first participating function entity sends a second session invitation message via the first SIP/IP core network and a second SIP/IP core network to which the receiver belongs, and the second session invitation message is received by a second participating function entity to which the receiver belongs; the second participating function entity sends a third session invitation message via the second SIP/IP core network, and the third session invitation message is received by the CPM client of the receiver; the CPM client of the receiver negotiates with the CPM client of the sender to determine a media transmission link between the CPM clients of the sender and the receiver; the CPM client of the sender sends the content of the large message mode CPM message to the CPM client of the receiver via the determined media transmission link; and the CPM client of the sender or the receiver initiates a flow to end the session of the large message mode CPM message.

Aiming at the problem that a large message mode CPM message cannot be transmitted between two clients because there is no solution to the transmission of a large message mode CPM message in prior art, the present invention provides a method which can address the problem above by establishing a media transmission link between a CPM client of a sender and a CPM client of a receiver through a negotiation and enabling the CPM client of the sender to send a large message mode CPM message to the CPM client of the receiver through the media transmission link.

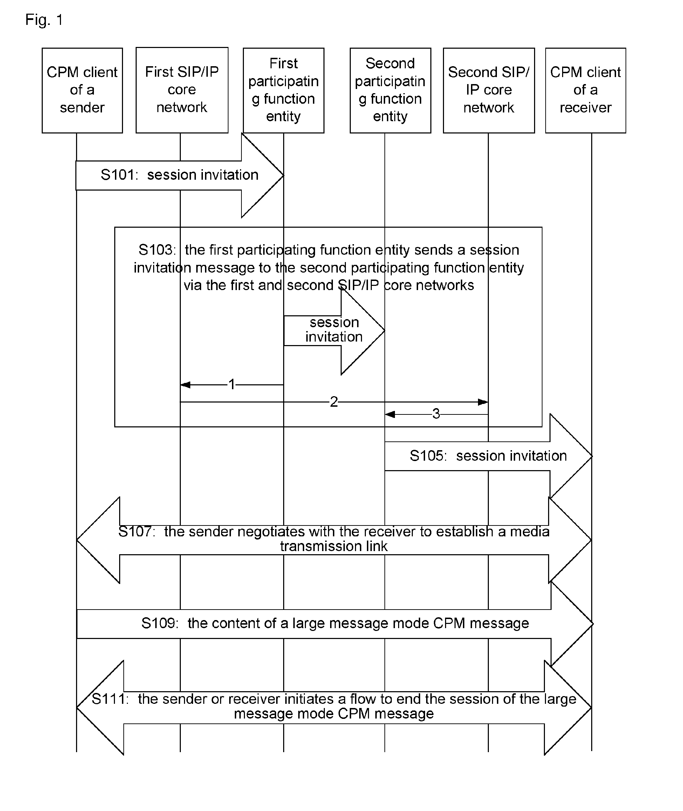

Fig. 1 is a flow chart of a method for transmitting a CPM message according to an embodiment of the present invention, as shown in this figure, when a CPM client of a sender sends a large message mode CPM message to a CPM client of a receiver, the method for transmitting a CPM message according to an embodiment of the present invention mainly comprises the following steps S101-S111:
step S101: the CPM client of the sender sends a session invitation message (that is, a first session invitation message) of a large message mode CPM message to a first participating function entity to which the sender belongs via a first SIP/IP core network to which the sender belongs;
step S103: the first participating function entity sends a session invitation message (that is, a second session invitation message) to a second participating function entity to which the receiver belongs via the first SIP/IP core network and a second SIP/IP core network to which the receiver belongs, the transmission process of the session invitation message in this step is indicated by the arrows labeled with 1, 2 and 3 in Fig. 1, and it is seen from the above three-step transmission process that in this process the session invitation message is transmitted from the first participating function entity to the second participating function entity;
step S105: the second participating function entity sends a session invitation message (namely, a third session invitation message) to the CPM client of the receiver via the second SIP/IP core network;
step S107: the CPM client of the receiver receives the session invitation message and negotiates with the CPM client of the sender to determine (establish or select) a media transmission link between the CPM clients of the sender and the receiver;
step S109: the CPM client of the sender sends the content of the large message mode CPM message to the CPM client of the receiver via the determined media transmission link;
and step S111: the CPM client of the sender or the receiver initiates a flow to end the session of the large message mode CPM message.

Wherein the first, second and third session invitation messages include a Session Description Protocol (SDP) session description parameter for a media negotiation. Preferably, the first, second and third session invitation messages further include service indication information for distinguishing a large message mode CPM message, wherein the service indication information is included in a parameter 'CPM Feature Tag' in a field 'Accept-Contact' of the session invitation message.

Wherein the first and second SIP/IP core networks are logical network elements, and their network element entities can be saved in practical application by integrating their functions into other network element entities.

The steps above are described below in detail:

### (1) steps S101, S103 and S105

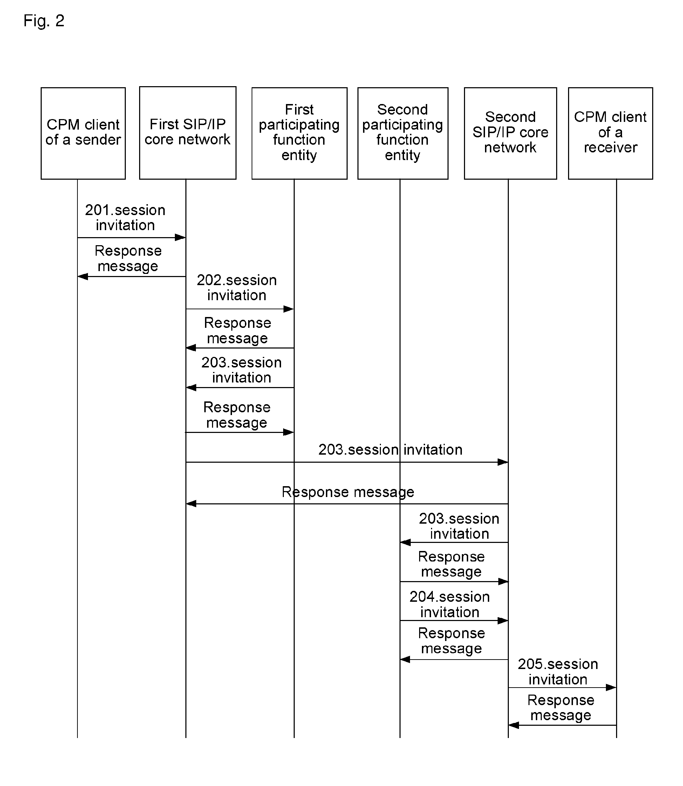

In a specific implementation process, when sending a large message mode CPM message to the CPM client of the receiver, the CPM client of the sender first sends a session invitation message of the large message mode CPM message to the CPM client of the receiver to establish a session of the large message mode CPM message; Fig. 2 is a flow chart of the sending of a session invitation message of a large message mode CPM message from the CPM client of the sender to the CPM client of the receiver according to an embodiment of the present invention, as shown in Fig. 2, the sending of the session invitation message from the CPM client of the sender to the CPM client of the receiver mainly comprises the following steps S201-S207:
step S201: the CPM client of the sender sends a session invitation message of the large message mode CPM message to the first SIP/IP core network;
step S202: the first SIP/IP core network forwards the session invitation message (referred to as a first session invitation message) to a participating function entity (referred to as the first participating function entity) to which the sender belongs;
wherein the participating function entity to which the sender belongs refers to a participating function entity to which the currently-bound CPM address of the CPM client of the sender belongs;
step S203: the first participating function entity to which the sender belongs sends the session invitation message to the first SIP/IP core network;
step S204: the first SIP/IP core network sends the session invitation to the second SIP/IP core network to which the receiver belongs;
step S205: the second SIP/IP core network sends a session invitation message (referred to as the second session invitation message) to the second participating function entity to which the receiver belongs;
step S206: the second participating function entity to which the receiver belongs forwards the session invitation to the second SIP/IP core network;
and step S207: the second SIP/IP core network sends a session invitation message (referred to as the third session invitation message) to the CPM client of the receiver.

As shown in Fig. 2, after receiving the session invitation messages, the first and second participating function entities, the first and second SIP/IP core networks and the CPM client of the receiver each returns a response message (100 Trying) to the network element which sends the session invitation messages.

### (2) step S107

In a specific implementation process, there exist, not in a limited way, the following two cases of the media transmission link between the CPM client of the receiver and the CPM client of the sender:
case 1, the media transmission link comprises: a first media transmission link between the first participating function entity and the CPM client of the sender, a second media transmission link between the first and the second participating function entities, and a third media transmission link between the CPM client of the receiver and the second participating function entity;
and case 2, the media transmission link between the CPM client of the receiver and the CPM client of the sender is an end-to-end link.

The two cases above are respectively explained below.

### Case 1

In this case, the media transmission link between the CPM client of the receiver and the CPM client of the sender is determined by, but not limited to, the following two methods.

### Method 1:

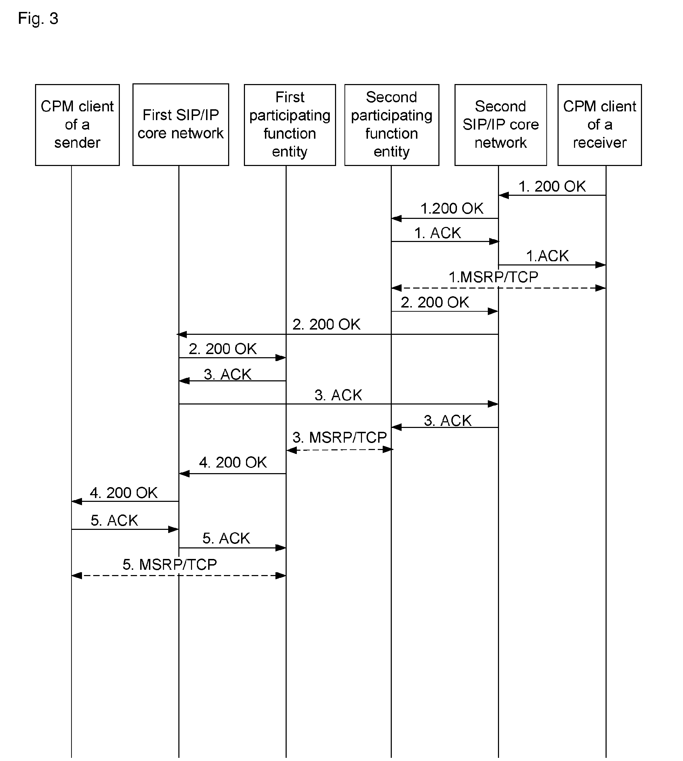

Specifically, as shown in Fig. 3, the determining a media transmission link between the CPM client of the sender and the CPM client of the receiver in this method comprises the following processing from step 1 to step 5:
step 1: the CPM client of the receiver returns a success response message (a third success response message shown as 200 OK in Fig. 3) to the second participating function entity via the second SIP/IP core network, receives a final acknowledge message (namely, a third acknowledge message shown as ACK in Fig. 3) sent by the second participating function entity, and establishes or selects a third media transmission link between the second participating function entity and itself;
   specifically, a third media transmission link can be established between the CPM client of the receiver and the second participating function entity, or a current media transmission link between the CPM client of the receiver and the second participating function entity can be selected and used as the third media transmission link;
step 2: the second participating function entity sends a success response message (namely, a second success response message) to the first participating function entity via the first and second SIP/IP core networks;
step 3: the second participating function entity receives an acknowledge message (namely, a second acknowledge message) returned by the first participating function entity via the first and second SIP/IP core networks, and establishes or selects a second media transmission link between the first participating function entity and itself;
step 4: the first participating function entity sends a success response message (namely, a first success response message) to the CPM client of the sender via the first SIP/IP core network;
and step 5: the first participating function entity receives an acknowledge message (namely, a first acknowledge message) returned by the CPM client of the sender via the first SIP/IP core network, and establishes or selects a first media transmission link between the CPM of the sender and itself.

Preferably, the third, second and first media transmission links established or selected in the flow above may be transmission links based on an MSRP protocol, over which both files and large message mode CPM messages can be transmitted.

### Method 2:

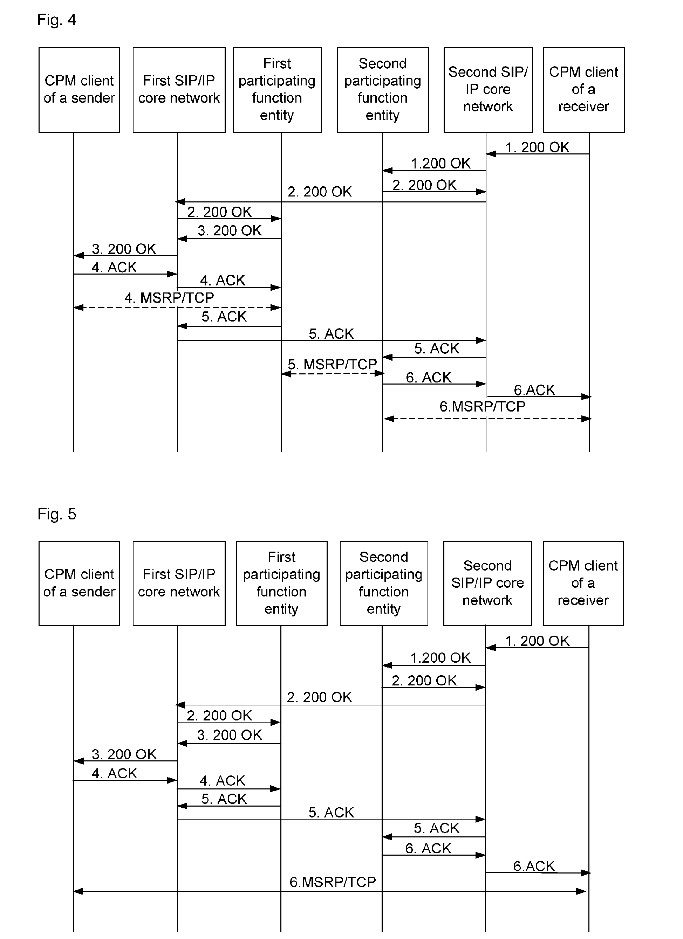

In this method, network entities between the CPM client of the receiver and the CPM client of the sender first forward a success response message returned by the CPM client of the receiver to the CPM client of the sender and then determines a media transmission path when the CPM client of the sender returns a final acknowledge message. Specifically, as shown in Fig. 4, in this method, the determining a media transmission link between the CPM client of the sender and the CPM client of the receiver comprises the following processing from step 1 to step 6:
step 1: the CPM client of the receiver returns a success response message (namely, a third success response message) to the second participating function entity via the second SIP/IP core network;
step 2: the second participating function entity sends a success response message (namely, a second success response message) to the first participating function entity via the first and second SIP/IP core networks;
step 3: the first participating function entity sends a success response message (namely, a first success response message) to the CPM client of the sender via the first SIP/IP core network;
step 4: the CPM client of the sender receives the success response message (namely, the first success response message), returns an acknowledge message (namely, a first acknowledge message) to the first participating function entity via the first SIP/IP core network, and establishes or selects a first media transmission link between the first participating function entity and the CPM of the sender;
similarly, a new media transmission link can be established between the CPM client of the sender and the first participating function entity, or an existing media transmission link between the CPM client of the sender and the first participating function entity is selected;
step 5: the second participating function entity receives an acknowledge message (namely, a second acknowledge message) returned by the first participating function entity via the first and second SIP/IP core networks, and establishes or selects a second media transmission link between the first participating function entity and itself;
   and step 6: the CPM of the receiver receives a final acknowledge message (namely, a third acknowledge message) sent by the second participating function entity via the second SIP/IP core network, and establishes or selects a third media transmission link between the second participating function entity and itself.

Preferably, the first, second and third media transmission links established or selected in the flow above may be transmission links based on an MSRP protocol, over which both files and large message mode CPM messages can be transmitted.

### Case 2

In this case, as shown in Fig. 5, the determining a media transmission link between the CPM client of the sender and the CPM client of the receiver mainly comprises the following processing from step 1 to step 6:
step 1: the second participating function entity receives a success response message (namely, a third success response message) returned by the CPM client of the receiver via the second SIP/IP core network and forwards a success response message (namely, a second success response message) to the first participating function entity via the first and second SIP/IP core networks;
step 2: the first participating function entity sends a success response message (namely, a first success response message) to the CPM client of the sender via the first SIP/IP core network;
step 3: the CPM client of the sender receives the success response message and returns a final acknowledge message (namely, a first acknowledge message) to the first participating function entity via the first SIP/IP core network;
step 4: the first participating function entity sends a final acknowledge message (namely, a second acknowledge message) to the second participating function entity via the first and second SIP/IP core networks;
step 5: the second participating function entity sends a final acknowledge message (namely, a third acknowledge message) to the CPM client of the receiver via the second SIP/IP core network;
   and step 6, the CPM client of the receiver receives the final acknowledge message and establishes or selects an end-to-end media transmission link between the CPM client of the sender and itself.

Preferably, the end-to-end media transmission link established or selected in the flow above may be a transmission link based on an MSRP protocol, over which both files and large message mode CPM messages can be transmitted.

### (3) step S109

After determining the media transmission link, the CPM client of the sender sends the content of the large message mode CPM message (namely, a message body, which is also referred to as CPM large message media) to the CPM client of the receiver via the determined media transmission link.

Specifically, corresponding to the two determination situations of the media transmission link, the CPM client of the sender sends the content of the large message mode CPM message to the CPM client of the receiver in the following two ways that are respectively described below.

### Sending the content of the large message mode CPM message via the first, second and third media transmission links

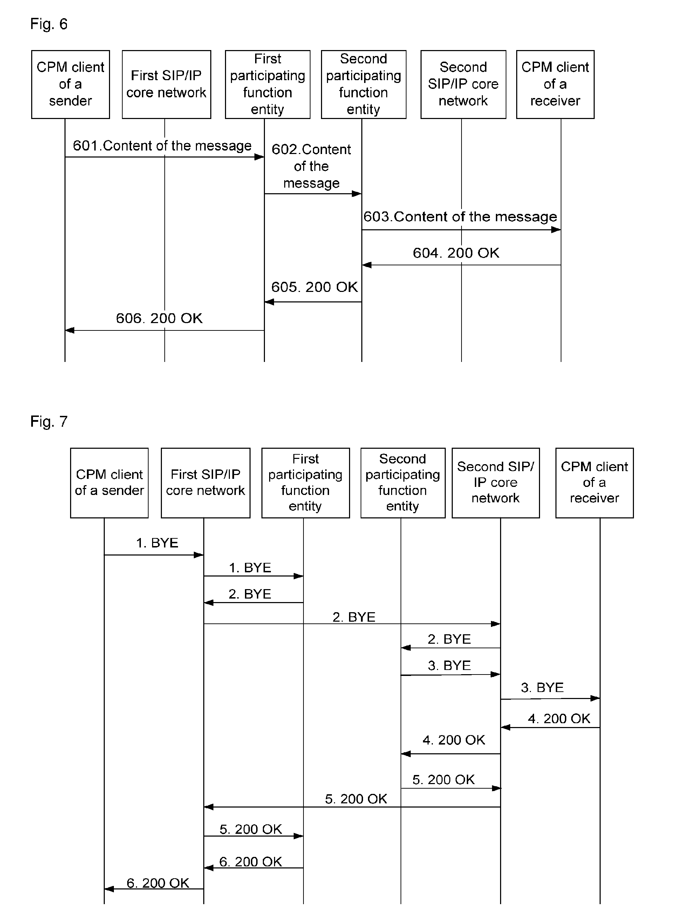

Specifically, in this case, the sending of the content of the large message mode CPM message from the CPM client of the sender to the CPM client of the receiver may be realized through the flow shown in Fig. 6, as shown in Fig. 6, the sending of the content of the large message mode CPM message to the CPM client of the receiver mainly comprises the following steps S601-S606:
step S601: the CPM client of the sender sends the content of the large message mode CPM message to the participating function entity (also referred to as the first participating function entity) to which the CPM client of the sender belongs via the first media transmission link;
step S602: the participating function entity to which the sender belongs sends the content of the large message mode CPM message to the participating function entity (also referred to as the second participating function entity) to which the CPM client of the receiver belongs via the second media transmission link;
step S603: the participating function entity to which the receiver belongs sends the content to the CPM client of the receiver via the third media transmission link;
step S604: after receiving the above content, the CPM client of the receiver sends a success response message (200 OK) to the participating function entity to which the CPM client of the receiver belongs via the third media transmission link;
step S605: the participating function entity to which the receiver belongs forwards the success response message to the participating function entity to which the sender belongs via the second media transmission link;
and step S606: the participating function entity to which the sender belongs sends the received success response message to the CPM client of the sender via the third media transmission link.

### Sending the content of the large message mode CPM message via an end-to-end media transmission link between the CPM client of the receiver and the CPM client of the sender

In this case, the CPM client of the sender directly sends the content of the large message mode CPM message (namely, CPM large message media) to the CPM client of the receiver via the end-to-end media transmission link; after receiving the content of the large message mode CPM message, the CPM client of the receiver directly sends a success response message to the CPM client of the sender via the end-to-end media transmission link.

### (4) step S111

It is needed to end the session after the transmission of the content of the large message mode CPM message is completed or when the CPM client of the sender receives a success response message in response to the last MSRP transmission packet (that is, an SEND packet) sent by itself, specifically, the session ending flow may be initiated by the CPM client of the sender or the CPM client of receiver in the following ways:

### Initiating the session ending flow by the CPM client of the sender

Specifically, as shown in Fig. 7, the initiating the session ending flow by the CPM client of the sender mainly comprises the following steps 1-6:
step 1: the CPM client of the sender sends an indication message (i.e. BYE) indicative of the completion of the transmission of the large message mode CPM message to the first participating function entity via the first SIP/IP core network;
step 2: the first participating function entity sends the indication message to the second participating function entity via the first and second SIP/IP core networks;
step 3: the second participating function entity sends the indication message to the CPM client of the receiver via the second SIP/IP core network;
step 4: the CPM client of the receiver receives the indication message and sends a response message to the second participating function entity via the second SIP/IP core network;
step 5: the second participating function entity sends a response message to the first participating function entity via the first and second SIP/IP core networks;
and step 6: the first participating function entity sends a response message to the CPM client of the sender via the first SIP/IP core network.

### Initiating the session ending flow by the CPM client of the receiver

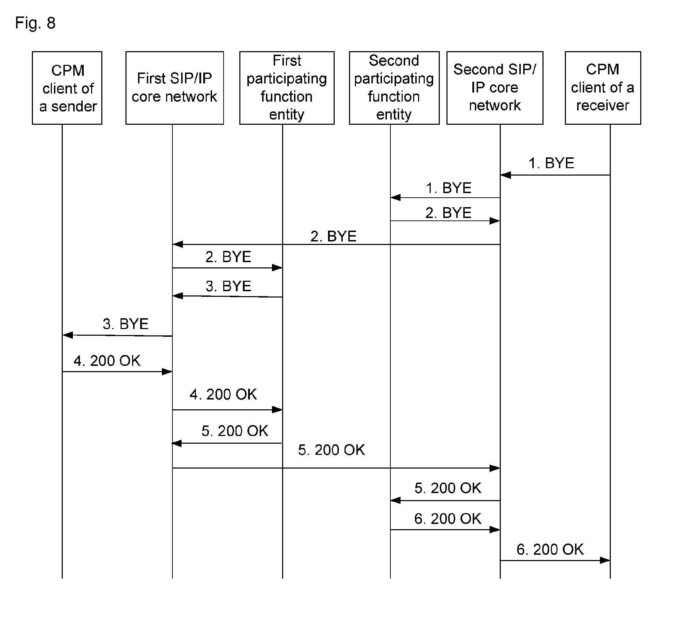

Specifically, as shown in Fig. 8, the initiating the session ending flow by the CPM client of the receiver mainly comprises the following steps 1-6:
step 1: the CPM client of the receiver sends an indication message (i.e. BYE) indicative of the completion of the transmission of the large message mode CPM message to the second participating function entity via the second SIP/IP core network;
step 2: the second participating function entity sends the indication message to the first participating function entity via the second and first SIP/IP core networks;
step 3: the first participating function entity sends the indication message to the CPM client of the sender via the first SIP/IP core network;
step 4: the CPM client of the sender receives the indication message and sends a response message in response to the indication message to the first participating function entity via the first SIP/IP core network;
step 5: the first participating function entity returns a response message to the second participating function entity via the first and second SIP/IP core networks;
   and step 6: the second participating function entity sends a response message to the CPM client of the receiver via the second SIP/IP core network.

The method for transmitting a large message mode CPM message provided in the embodiments of the present invention realizes the transmission of a large message mode CPM message between two clients in a CPM system.

It should be noted that in the method provided in the embodiments of the present invention for transmitting large message mode converged IP messaging, the session invitation messages passing through different functional entities can be the same or different, and similarly, the success response messages passing through different functional entities can also be the same or different.

In the case where the session invitation messages and the success response messages passing through different functional entities are different, when the CPM client of the sender sends a large message mode CPM message to the CPM client of the receiver, the present invention may comprise the following steps that: the CPM client of the sender sends a first session invitation message of the large message mode CPM message to the first participating function entity to which the sender belongs via the first SIP/IP core network to which the sender belongs; the first participating function entity receives the first session invitation message and sends a second session invitation message of the large message mode CPM message to the second participating function entity to which the receiver belongs via the first SIP/IP core network and the second SIP/IP core network to which the receiver belongs; the second participating function entity receives the second session invitation message and sends a third session invitation message of the large message mode CPM to the CPM client of the receiver via the second SIP/IP core network; the CPM client of the receiver receives the third session invitation message and negotiates with the CPM client of the sender to determine a media transmission link between the CPM client of the sender and the CPM client of the receiver; the CPM client of the sender sends the content of the large message mode CPM message to the CPM client of the receiver via the determined media transmission link; and the CPM client of the sender or the CPM client of the receiver initiates a flow to end the session of the large message mode CPM message.

The call IDs in the first, second and third session invitation messages may be different.

Preferably, the step that the CPM client of the receiver negotiates with the CPM client of the sender to determine a media transmission link comprises: the second participating function entity receives a first success response message returned by the CPM client of the receiver via the second SIP/IP core network, sends a second success response message to the first participating function entity via the second and first SIP/IP core networks, sends a final acknowledge message to the CPM client of the receiver, and establishes or selects the third media transmission link between the CPM client of the receiver and itself; the first participating function entity receives the second success response message, sends a third success response message to the sender via the first SIP/IP core network, sends an acknowledge message to the second participating function entity via the first and second SIP/IP core networks, and establishes or selects a second media transmission link between the second participating function entity and itself; and the CPM client of the sender receives the third success response message, sends an acknowledge message to the first participating function entity via the first SIP/IP core network, and establishes or selects a first media transmission link between the first participating function entity and itself.

Preferably, the step that the CPM client of the receiver negotiates with the CPM client of the sender to determine a media transmission link comprises: the CPM client of the receiver sends a first success response message to the second participating function entity via the second SIP/IP core network; the second participating function entity sends a second success response message to the first participating function entity via the second and first SIP/IP core networks; the first participating function entity sends a third success response message to the sender via the first SIP/IP core network; the CPM client of the sender receives the third success response message, sends an acknowledge message to the first participating function entity via the first SIP/IP core network, and establishes or selects a first media transmission link between the first participating function entity and the CPM client of the sender; the second participating function entity receives an acknowledge message sent by the first participating function entity via the first and second SIP/IP core networks and establishes or selects a second media transmission link between the first participating function entity and itself; and the CPM client of the receiver receives a final acknowledge message sent by the second participating function entity via the second SIP/IP core network, and establishes or selects a third media transmission link between the second participating function entity and itself.

Preferably, the step that the CPM client of the receiver negotiates with the CPM client of the sender to determine a media transmission link comprises: the second participating function entity receives a first success response message sent by the CPM client of the receiver via the second SIP/IP core network and sends a second success response message to the first participating function entity via the second and first SIP/IP core networks; the first participating function entity sends a third success response message to the CPM client of the sender via the first SIP/IP core network; the CPM client of the sender receives the third success response message and sends a final acknowledge message to the first participating function entity via the first SIP/IP core network; the first participating function entity sends the final acknowledge message to the second participating function entity via the first and second SIP/IP core networks; the second participating function entity sends the final acknowledge message to the CPM client of the receiver via the second SIP/IP core network; and the CPM client of the receiver receives the final acknowledge message, and establishes or selects an end-to-end media transmission link between the CPM client of the sender and the CPM client of the receiver.

The call IDs in the first, second and third success response messages may be different.

The following description on specific embodiments is provided for a better understanding of the specific implementation of the technical solutions provided in the embodiments of the present invention. It should be noted that the session invitation message and the success response message below may be changed or not after passing through a functional entity.

In the following embodiments, the CPM client of the sender is represented with CPM Client A, the first participating function entity to which the CPM client of the sender belongs is represented with Participating Function A, the CPM client of the receiver is represented with CPM Client B, the second participating function entity to which the CPM client of the receiver belongs is represented with Participating Function B, the first SIP/IP core network to which the CPM Client A belongs is represented with SIP/IP Core A, and the second SIP/IP core network to which the CPM Client B belongs is represented with SIP/IP Core B.

### Embodiment 1

In this embodiment, the media transmission link between the CPM client of the sender and the CPM client of the receiver is determined using the method 1 and accords with the case 1 above; this media transmission link is an MSRP/TCP transmission link, and the session ending flow is initiated by the CPM client of the receiver.

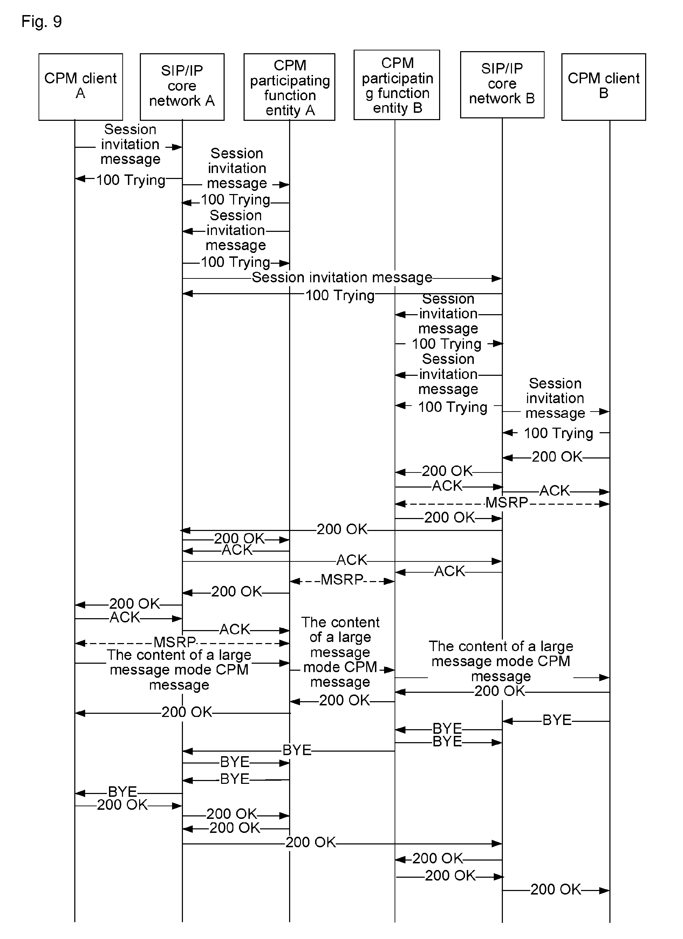

Fig. 9 is a flow chart of the transmission of a large message mode CPM message according to this embodiment, as shown in Fig. 9, in this embodiment, the transmission of a large message mode CPM message mainly comprises the following processing from step 1 to step 44:
step1: the CPM Client A sends a session invitation message of a large message mode CPM message (CPM Large Message Invitation), that is, INVITE, to the SIP/IP Core A;
step 2: the SIP/IP Core A forwards the session invitation message to the Participating Function A;
   the steps 1 and 2 are an equivalent of the step S101 shown in Fig. 1;
step 3: the Participating Function A returns a session invitation message to the SIP/IP Core A;
step 4: the SIP/IP Core A sends the session invitation message to the SIP/IP Core B;
step 5: the SIP/IP Core B sends the session invitation message to the Participating Function B;
   the steps 3-5 are an equivalent of the step S103 shown in Fig. 1;
step 6: the Participating Function B returns a session invitation message to the SIP/IP Core B;
step 7: the SIP/IP Core B sends the session invitation message to the CPM Client B;
   the steps 6 and 7 are an equivalent of the step S105 shown in Fig. 1;
step 8: the CPM Client B returns a success response message (200 OK) to the SIP/IP Core B;
step 9: the SIP/IP Core B sends the success response message to the Participating Function B;
step 10: the Participating Function B sends a final acknowledge message (ACK) to the SIP/IP Core B;
step 11: the SIP/IP Core B sends the final acknowledge message to the CPM Client B;
step 12: an MSRP/TCP transmission link is established between the CPM Client B and the Participating Function B;
step 13: the Participating Function B sends a success response message to the SIP/IP Core B, and preferably, this step is synchronous with the step 10;
step 14: the SIP/IP Core B sends the success response message to the SIP/IP Core A;
step 15: the SIP/IP Core A sends the success response message to the Participating Function A;
step 16: the Participating Function A sends a final acknowledge message (ACK) to the SIP/IP Core A;
step 17: the SIP/IP Core A sends the final acknowledge message to the SIP/IP Core B;
step 18: the SIP/IP Core B sends the final acknowledge message to the Participating Function B;
step 19: the Participating Function A establishes an MSRP/TCP transmission link with the Participating Function B;
step 20: the Participating Function A sends a success response message to the SIP/IP Core A, and preferably, this step is synchronous with the step 16;
step 21: the SIP/IP Core A forwards the success response message to the CPM Client A;
step 22: the CPM Client A returns a final acknowledge message to the SIP/IP Core A;
step 23: the SIP/IP Core A sends the final acknowledge message to the Participating Function A;
step 24: the CPM Client A establishes an MSRP/TCP transmission link with the Participating Function A;
   the steps 8-24 are an equivalent of the step S107 shown in Fig. 1;
step 25: the CPM Client A sends the content of the large message mode CPM message (CPM Large Message Media), that is, media, to the Participating Function A via the MSRP/TCP transmission link established between the CPM Client A and the Participating Function A;
step 26: the Participating Function A sends the content of the large message mode CPM message to the Participating Function B via the MSRP/TCP transmission link established between the Participating Function A and the Participating Function B;
step 27: the Participating Function B sends the content of the large message mode CPM message to the CPM Client B via the MSRP/TCP transmission link established between the Participating Function B and the CPM Client B;
   the steps 25-27 are an equivalent of the step S109 shown in Fig. 1;
step 28: the CPM Client B returns a success response message (200 OK) to the Participating Function B;
step 29: the Participating Function B returns a success response message to the Participating Function A;
step 30: the Participating Function A returns a success response message to the CPM Client A;
step 31: the CPM Client B sends a transmission completion acknowledge message (BYE) to the SIP/IP Core B;
step 32: the SIP/IP Core B sends the transmission completion acknowledge message to the Participating Function B;
step 33: the Participating Function B sends a transmission completion acknowledge message to the SIP/IP Core B;
step 34: the SIP/IP Core B sends the transmission completion acknowledge message to the SIP/IP Core A;
step 35: the SIP/IP Core A sends the transmission completion acknowledge message to the Participating Function A;
step 36: the Participating Function A sends a transmission completion acknowledge message to the SIP/IP Core A;
step 37: the SIP/IP Core A sends the transmission completion acknowledge message to the CPM Client A;
   and steps 38-44: the CPM Client A returns a success response message (200 OK) to the CPM Client B through a path inverse to that transmitting the transmission completion acknowledge message.

The steps 28-44 are an equivalent of the step S111 shown in Fig. 1;

### Embodiment 2

In this embodiment, the media transmission link between the CPM client of the sender and the CPM client of the receiver is determined using the method 2 and accords with the case 1, and this media transmission link is an MSRP/TCP transmission link, and the session ending flow is initiated by the CPM client of the receiver.

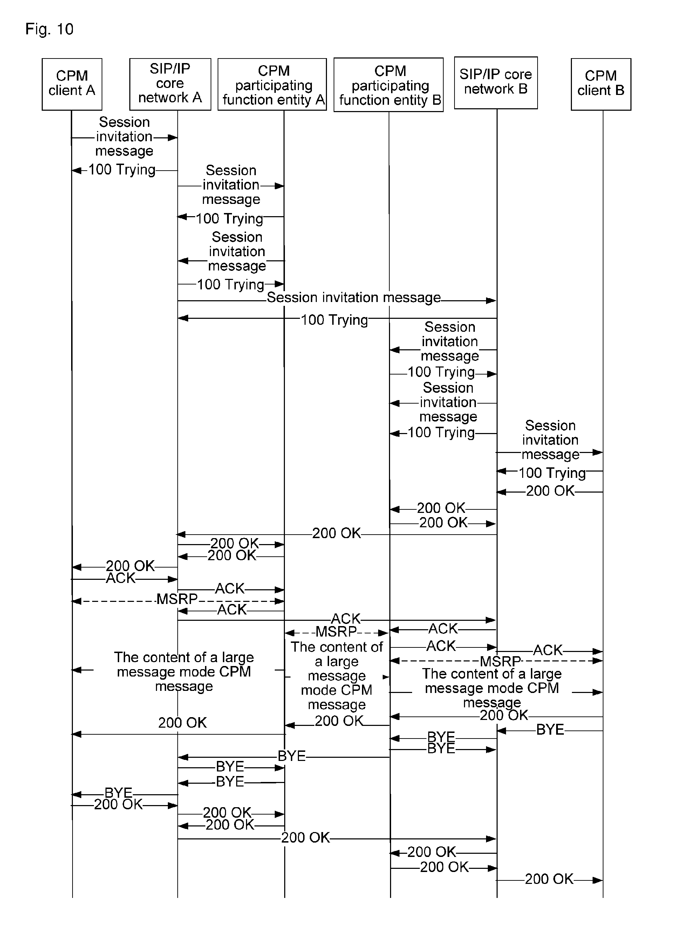

Fig. 10 is a flow chart of the transmission of a large message mode CPM message according to this embodiment, as shown in Fig. 10, in this embodiment, the transmission of a large message mode CPM message mainly comprises the following processing from step 1 to step 44:
step 1: the CPM Client A sends a session invitation message of a large message mode CPM message (CPM Large Message Invitation), that is, INVITE, to the SIP/IP Core A;
step 2: the SIP/IP Core A forwards the session invitation message to the Participating Function A;
   the steps 1 and 2 are an equivalent of the step S101 shown in Fig. 1;
step 3: the Participating Function A returns a session invitation message to the SIP/IP Core A;
step 4: the SIP/IP Core A sends the session invitation message to the SIP/IP Core B;
step 5: the SIP/IP Core B sends the session invitation message to the Participating Function B;
   the steps 3-5 are an equivalent of the step S103 shown in Fig. 1;
step 6: the Participating Function B returns a session invitation message to the SIP/IP Core B;
step 7: the SIP/IP Core B sends the session invitation message to the CPM Client B;
   the steps 6 and 7 are an equivalent of the step S105 shown in Fig. 1;
step 8: the CPM Client B returns a success response message (200 OK) to the SIP/IP Core B;
step 9: the SIP/IP Core B sends the success response message to the Participating Function B;
step 13: the Participating Function B sends a success response message to the SIP/IP Core B;
Step 14: the SIP/IP Core B sends the success response message to the SIP/IP Core A;
step 15: the SIP/IP Core A sends the success response message to the Participating Function A;
step 16: the Participating Function A sends a success response message to the SIP/IP Core A;
step 17: the SIP/IP Core A forwards the success response message to the CPM Client A;
step 18: the CPM Client A returns a final acknowledge message to the Participating Function A via the SIP/IP Core A;
step 19: the Participating Function A receives the final acknowledge message, and an MSRP/TCP transmission link is established between the CPM Client A and the Participating Function A;
   if there exists an MSRP/TCP transmission link between the CPM Client A and the Participating Function A, the existing MSRP/TCP transmission link can also be selected as an MSRP/TCP transmission link for the large message mode CPM message;
step 20: the Participating Function A sends a final acknowledge message (ACK) to the Participating Function B via the SIP/IP Core A and the SIP/IP Core B;
step 21: the Participating Function B receives the final acknowledge message, and an MSRP/TCP transmission link is established between the Participating Function A and the Participating Function B;
step 22: the Participating Function B sends a final acknowledge message (ACK) to the SIP/IP Core B;
step 23: the SIP/IP Core B sends the final acknowledge message to the CPM Client B;
step 24: an MSRP/TCP transmission link is established between the CPM Client B and the Participating Function B;
   similarly, an existing transmission link between the CPM Client B and the Participating Function B can be also selected;
   the steps 8-24 are an equivalent of the step S107 shown in Fig. 1;
step 25: the CPM Client A sends the content of the large message mode CPM message (CPM Large Message Media), that is, media, to the Participating Function A via the MSRP/TCP transmission link established between the CPM Client A and the Participating Function A;
step 26: the Participating Function A sends the content of the large message mode CPM message to the Participating Function B via the MSRP/TCP transmission link established between the Participating Function A and the Participating Function B;
step 27: the Participating Function B sends the content of the large message mode CPM message to the CPM Client B via the MSRP/TCP transmission link established between the Participating Function B and the CPM Client B;
   the steps 25-27 are an equivalent of the step S109 shown in Fig. 1;
step 28: the CPM Client B returns a success response message (200 OK) to the Participating Function B;
step 29: the Participating Function B returns a success response message to the Participating Function A;
step 30: the Participating Function A returns a success response message to the CPM Client A;
step 31: the CPM Client B sends a transmission completion acknowledge message (BYE) to the SIP/IP Core B;
step 32: the SIP/IP Core B sends the transmission completion acknowledge message to the Participating Function B;
step 33: the Participating Function B returns a transmission completion acknowledge message to the SIP/IP Core B;
step 34: the SIP/IP Core B sends the transmission completion acknowledge message to the SIP/IP Core A;
step 35: the SIP/IP Core A sends the transmission completion acknowledge message to the Participating Function A;
step 36: the Participating Function A sends a transmission completion acknowledge message to the SIP/IP Core A;
step 37: the SIP/IP Core A sends the transmission completion acknowledge message to the CPM Client A;
   and steps 38-44: the CPM Client A returns a success response message (200 OK) to the CPM Client B through a path inverse to that transmitting the transmission completion acknowledge message.

The steps 28-44 are an equivalent of the step S111 shown in Fig. 1;

### Embodiment 3

In this embodiment, the media transmission link between the CPM client of the sender and the CPM client of the receiver accords with the case 2 and is an MSRP/TCP transmission link, and the session ending flow is initiated by the CPM client of the sender.

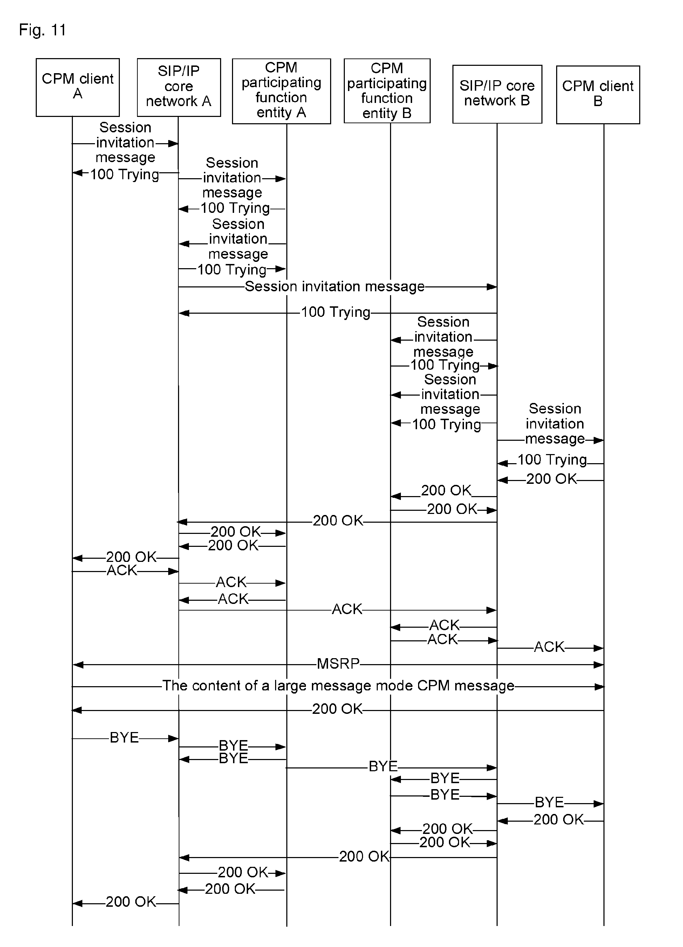

Fig. 11 is a flow chart of the transmission of a large message mode CPM message according to this embodiment, as shown in Fig. 11, in this embodiment, the transmission of a large message mode CPM message mainly comprises the following processing from step 1 to step 32:
step 1: the CPM Client A sends a session invitation message of a large message mode CPM message (CPM Large Message Invitation), that is, INVITE, to the SIP/IP Core A;
step 2: the SIP/IP Core A forwards the session invitation message to the Participating Function A;
   the steps 1 and 2 are an equivalent of the step S101 shown in Fig. 1;
step 3: the Participating Function A returns a session invitation message to the SIP/IP Core A;
step 4: the SIP/IP Core A sends the session invitation message to the SIP/IP Core B;
step 5: the SIP/IP Core B sends the session invitation message to the Participating Function B;
   the steps 3-5 are an equivalent of the step S103 shown in Fig. 1;
step 6: the Participating Function B returns a session invitation message to the SIP/IP Core B;
step 7: the SIP/IP Core B sends the session invitation message to the CPM Client B;
   the steps 6 and 7 are an equivalent of the step S105 shown in Fig. 1;
step 8: the CPM Client B returns a success response message (200 OK) to the SIP/IP Core B;
step 9: the SIP/IP Core B sends the success response message to the Participating Function B;
step 13: the Participating Function B sends a success response message to the SIP/IP Core B;
step 14: the SIP/IP Core B sends the success response message to the SIP/IP Core A;
step 15: the SIP/IP Core A sends the success response message to the Participating Function A;
step 16: the Participating Function A sends a success response message to the SIP/IP Core A;
step 17: the SIP/IP Core A forwards the success response message to the CPM Client A;
step 18: the CPM Client A returns a final acknowledge message (ACK) to the Participating Function A via the SIP/IP Core A;
step 19: the Participating Function A receives the final acknowledge message and then sends a final acknowledge message to the SIP/IP Core A;
step 20: the SIP/IP Core A sends the final acknowledge message to the SIP/IP Core B;
step 21: the SIP/IP Core B sends the final acknowledge message (ACK) to the Participating Function B;
step 22: the Participating Function B receives the final acknowledge message and then sends a final acknowledge message (ACK) to the SIP/IP Core B;
step 23: the SIP/IP Core B sends the final acknowledge message to the CPM Client B;
step 24: the CPM Client B receives the final acknowledge message, and establishes an end-to-end MSRP/TCP transmission link with the CPM Client A;
   the steps 8-24 are an equivalent of the step S107 shown in Fig. 1;
step 25, the CPM Client A sends the content of the large message mode CPM message (CPM Large Message Media), that is, media, to the CPM Client B via the end-to-end MSRP/TCP transmission link established between the CPM Client A and the CPM Client B;
step 26: the CPM Client B receives the content of the large message mode CPM message and returns a success response message (200 OK) to the CPM Client A via the end-to-end MSRP/TCP transmission link;
   the steps 25 and 26 are an equivalent of the step S109 shown in Fig. 1;
step 27: the CPM Client B sends an indication message (BYE) indicative of the completion of the transmission to the Participating Function B via the SIP/IP Core B;
step 28: the Participating Function B sends the indication message to the Participating Function A via the SIP/IP Core A and the SIP/IP Core B;
   specifically, the Participating Function B sends an indication message to the SIP/IP Core B, the SIP/IP Core B receives the indication message and then forwards the indication message to the SIP/IP Core A, and the SIP/IP Core A then forwards the received indication message to the Participating Function A.
step 29: the Participating Function A returns the indication message to the CPM Client A via the SIP/IP Core A;
specifically, the Participating Function A sends the indication message to the SIP/IP Core A, and then the SIP/IP Core A forwards the indication message to the CPM Client A;
step 30: the CPM Client A sends a response message (200 OK) in response to the indication message to the Participating Function A via the SIP/IP Core A;
step 31: the Participating Function A sends the response message to Participating Function B via the SIP/IP Core B and the SIP/IP Core A;
   specifically, the Participating Function A forwards the response message to the SIP/IP Core B, and then the SIP/IP Core B forwards the response message to the Participating Function B;
   and step 32: the Participating Function B sends the response message to CPM Client B via the SIP/IP Core B;
   specifically, the Participating Function B forwards the response message to the SIP/IP Core B, and then the SIP/IP Core B forwards the response message to the CPM Client B.

According to an embodiment of the present invention, a computer-readable medium is further provided, in which a computer-executable instruction is stored, and a computer or processor executes each step shown in Fig. 1 to Fig. 11, preferably, one or more of the aforementioned embodiments 1-3 when the instruction is executed by the computer or processor.

### System embodiment

In accordance with an embodiment of the present invention, there is further provided a system for transmitting a large message mode CPM message.

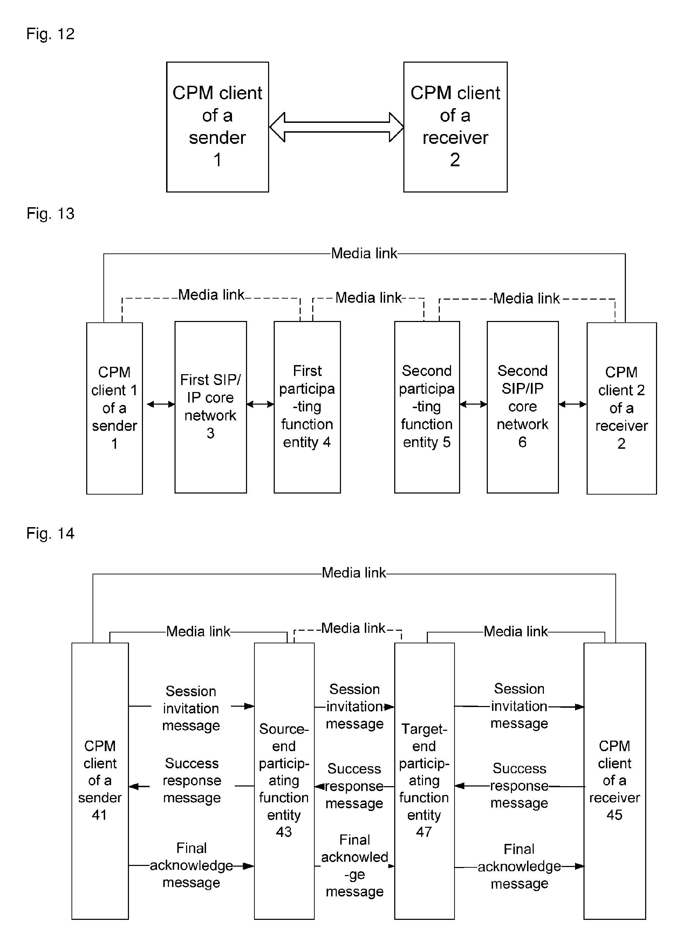

Fig. 12 is a schematic diagram illustrating the structure of the system for transmitting a large message mode CPM message according to the embodiment of the present invention, as shown in Fig. 12, the system for transmitting a large message mode CPM message according to the embodiment of the present invention mainly comprises a CPM client 1 of a sender and a CPM client 2 of a receiver, wherein the CPM client 1 of the sender is arranged for establishing a media transmission link with the CPM client 2 of the receiver through a session invitation of a large message mode CPM message and sending content of the large message mode CPM message to the CPM client of the receiver through the media transmission link; and the CPM client 2 of the receiver is arranged for receiving the session invitation of the large message mode CPM message, establishing the media transmission link according to the session invitation, and receiving the content of the large message mode CPM message sent by the CPM client 1 of the sender via the media transmission link.

Further, as shown in Fig. 13, the system for transmitting a large message mode CPM message according to this embodiment may further comprise a first SIP/IP core network 3, a first participating function entity 4, a second participating function entity 5, and a second SIP/IP core network 6, wherein the first SIP/IP core network 3 connected with the CPM client 1 of the sender and the first participating function entity 4 is arranged for forwarding the session invitation received from the CPM client 1 of the sender to the first participating function entity 4; the first participating function entity 4, which is connected with the first SIP/IP core network 3, and to which the CPM client 1 of the sender belongs, is arranged for receiving the session invitation and forwarding the session invitation to the second participating function entity 5 via the first SIP/IP core network 3 and the second SIP/IP core network 6; the second participating function entity 5, to which the receiver belongs, is arranged for receiving the session invitation and sending the session invitation to the CPM client 2 of the receiver via the second SIP/IP core network 6; and the second SIP/IP core network 6 which is connected with the CPM client 2 of the receiver and the second participating function entity 5 is arranged to receive the session invitation sent by the second participating function entity 5 and forward the received session invitation to the CPM client 2 of the receiver.

Further, the second participating function entity 5 may be further arranged for interacting with the CPM client 2 of the receiver via the second SIP/IP core network 6 and establishing a third media transmission link to the CPM client 2 of the receiver; the first participating function entity 4 may be further arranged for interacting with the second participating function entity 5 via the first SIP/IP core network 4 and the second SIP/IP core network 6 and establishing a second media transmission link to the second participating function entity 5; and the CPM client 2 of the sender may be further arranged for interacting with the first participating function entity 4 via the first SIP/IP core network 3 and establishing a first media transmission link to the first participating function entity 4.

In accordance with an embodiment of the present invention, there is further provided another system for transmitting a large message mode CPM message.

Fig. 14 is a schematic diagram illustrating the structure of the system for transmitting a large message mode CPM message according to this embodiment, as shown in this figure, the system for transmitting a large message mode CPM message according to this embodiment mainly comprises: CPM client 41 of a sender, a source-end participating function entity 43, CPM client 45 of a receiver, and a target-end-end participating function entity 47.

Wherein the CPM client 41 of the sender is arranged for sending a session invitation message of a large message mode CPM message, wherein the session invitation message of the large message mode CPM message includes a session description protocol (SDP) session description parameter for a media negotiation to negotiate with the CPM client 45 of the receiver about a media transmission link for transmitting the large message mode CPM message; the source-end participating function entity 43, which is connected with the CPM client 41 of the sender, and to which the sender belongs, is arranged for receiving and sending the session invitation message coming from the CPM client 41 of the sender; the target-end-end participating function entity 47, which is connected with the source-end participating function entity 43, and to which the receiver belongs, is arranged for receiving and sending the session invitation message coming from the source-end participating function entity 43; and the CPM client 45 of the receiver which is connected with the target-end-end participating function entity 47 is arranged to receive the session invitation message from the target-end-end participating function entity 47.

Further, the session invitation message further includes service indication information for distinguishing a large message mode CPM message. Specifically, the service indication information may be included in a parameter 'CPM Feature Tag' in a field 'Accept-Contact' of the session invitation message.

The CPM client 45 of the receiver may be further used for sending a success response message after receiving the session invitation message. The success response message first arrives at the target-end-end participating function entity 47, and correspondingly, the target-end-end participating function entity 47 may be further arranged for receiving the above success response message and sending the received success response message to the source-end participating function entity 43; the source-end participating function entity 43 may be further arranged for receiving the above success response message sent by the target-end-end participating function entity 47 and sending the received success response message to the CPM client 41 of the sender; and the CPM client of the sender may be further arranged for receiving the above success response message.

Further, after receiving the success response message above, the CPM client 41 of the sender is arranged for sending a final acknowledge message. Then, the source-end participating function entity 43 may be further arranged for receiving the final acknowledge message from the CPM client 41 of the sender and sending the received final acknowledge message; the target-end participating function entity 47 may be further arranged for receiving the final acknowledge message from the source-end participating function entity 43 and sending the received final acknowledge message; and the CPM client 45 of the receiver may be further arranged for receiving the final acknowledge message from the target-end participating function entity 47.

Further, the CPM client 41 of the sender may be further arranged for selecting or establishing a media transmission link for transmitting the content of the large message mode CPM message;
and the CPM client of the receiver may be further arranged for selecting or establishing a media transmission link for transmitting the content of the large message mode CPM message.

Moreover, after selecting or establishing the media transmission link, the CPM client 41 of the sender may be further arranged for sending the content of the large message mode CPM message through the selected or established media transmission link.

Further, the source-end participating function entity 43 may be further arranged for selecting or establishing a media transmission link for transmitting the content of the large message mode CPM message after receiving the final acknowledge message of the session invitation message of the large message mode CPM message. Moreover, the source-end participating function entity 43 may be further arranged for sending the content of the received large message mode CPM message through the selected or established media transmission link.

Further, the target-end participating function entity 47 may be further arranged for, after receiving the final acknowledge message of the session invitation message of the large message mode CPM message, selecting or establishing a media transmission link for transmitting the content of the large message mode CPM message. Moreover, the target-end participating function entity 47 may be further arranged for sending the received content of the large message mode CPM message through the selected or established media transmission link.

Further, the CPM client of the receiver may be further arranged for selecting or establishing a media transmission link for transmitting the content of the large message mode CPM message after receiving the final acknowledge message sent by the target-end participating function entity 47 and receiving the content of the large message mode CPM message via the media transmission link.

Moreover, the CPM client 45 of the receiver may be further arranged for selecting or establishing an end-to-end media transmission link to the CPM client 41 of the sender when receiving the final acknowledge message sent by the target-end participating function entity 47. And then, the CPM client 41 of the sender may be further arranged for sending the content of the large message mode CPM message to the CPM client 45 of the receiver via the end-to-end media transmission link.

Further, after the CPM client 45 of the receiver receives the content of the large message mode CPM message sent by the CPM client 41 of the sender or a success response message in response to the last-sent MSRP transmission packet (that is, SEND), the CPM client 41 of the sender may be further arranged for sending an indication message indicative of the completion of the session of the large message mode CPM message. Then the CPM client 45 of the receiver is further arranged for receiving the indication message indicative of the completion of the session of the large message mode CPM message and sending a response message in response to the indication message.

Further, after the content of the large message mode CPM message is transmitted to the CPM client 45 of the receiver, the CPM client 45 of the receiver may be further arranged for sending an indication message indicative of the completion of the session of the large message mode CPM message to the target-end participating function entity 47, the indication message is then sent by the target-end participating function entity 47 to the source-end participating function entity 43 and then sent by the source-end participating function entity 43 to the CPM client 41 of the sender; therefore, the CPM client 41 of the sender may be further arranged for receiving the indication message indicative of the completion of the session of the large message mode CPM message and sending a response message in response to the indication message. At last, the response message is sent to the CPM client 45 of the receiver via the source-end participating function entity 43 and the target-end participating function entity 47.

In the embodiments of the present invention, the CPM client 41 of the sender and the CPM client 45 of the receiver are CPM clients in a CPM system, and the source-end participating function entity 43 and the target-end participating function entity 47 are CPM participating function entities; the technical solutions of the embodiments of the present invention may be realized by software by expanding the CPM clients, the functions of each CPM client and the interfaces between the CPM clients; and the system described in an embodiment of the present invention can be realized by the coordinated CPM clients and CPM participating function software entities with improved functions.

Specifically, the CPM client 41 of the sender is represented with CPM Client-A, the source-end participating function entity 43 is represented with Participating Function-A, the CPM client 45 of the receiver is represented with CPM Client-B, and the target-end participating function entity 47 is represented with Participating Function-B.

The CPM client software generally consists of several software modules including an SIP (supportive to instant message expansion) protocol module, a Hypertext Transmit Protocol (HTTP) module, an SDP module, an XML module, a Codec module, a User Interface (UI) and the like. Due to different CPM client functions and different communication objects, a CPM client is intuitively deemed to be composed of the following several client agents:
a CPM client agent, which is the main body of a CPM client and is arranged for receiving and sending a CPM message and realizing related operation interfaces;
a Presence client agent (PS Client Agent), which communicates with a Presence server and is arranged for issuing a presence state and acquiring presence information;
a converged address book client agent (CAB Client Agent), which is arranged for communicating with a CAB server and maintaining related address information;
   and an XML Document Management (XDM) client agent (XDM Client Agent), which is arranged for communicating with an XDM server, maintaining related configuration, and acquiring presence information and address book information.

If achieved by software, the client agent above may consist of several of the aforementioned software modules, for instance, the XDM Client Agent consists of an HTTP protocol module, and an XML module and a UI module.

In the embodiments of the present invention, the CPM client comprises a UI module, a CPM coding-decoding module and an SIP protocol stack module (or referred to as a communication module). A user operates and controls a CPM client via the UI module and operates, when needing to send a large message mode CPM message to another user, related operation options (e.g. menu) to initiate an invitation request to the another user.

The CPM participating function described in the embodiments of the present invention is specifically required to realize the following purposes: When serving as a function entity interacting with the sender, the CPM participating function entity forwards an invitation request message sent by the sender to the participating function entity of the CPM client of the receiver via an SIP/IP Core. Moreover, after receiving a success response from the participating function entity at an opposite end, the CPM participating function entity on the one hand forwards the success response message to the CPM Client-A of the sender via an SIP/IP core, and on the other hand sends a final acknowledge message to the participating function entity of the receiver via the SIP/IP core, establishes an MRSP transmission link to the participating function entity of the receiver (Participating Function-B), and transmits a large message mode CPM message over the MRSP transmission link.

When serving as a function entity interacting with the receiver, the CPM participating function entity forwards an invitation request message sent by the sender to the CPM Client-B of the receiver via an SIP/IP Core. Moreover, when receiving a success response from the CPM Client-B, the CPM participating function entity, on the one hand, forwards the success response to the CPM Client-A of the sender via an SIP/IP Core on the one hand, and on the other hand sends a final acknowledge message to the CPM Client-B via the SIP/IP Core, establishes an MRSP transmission link to the CPM Client-B of the receiver, and transmits a large message mode CPM message over the MRSP transmission link.

By means of at least one of the solutions above, when sending a large message mode CPM message to a CPM client of a receiver, a CPM client of a sender first sends a session invitation of the large message mode CPM message, then negotiates with the CPM client of the receiver to establish a media transmission link, and sends the content of the large message mode CPM message to the CPM client of the receiver via the established media transmission link, therefore, the problem that a large message mode CPM message cannot be transmitted in prior art is solved and the user experience is consequentially improved.

In addition, as the invention can be easily achieved without modifying existing system architecture or processing flow, the invention can be conveniently popularized in the technical field and thus has relatively high industrial applicability.

The mentioned above is only preferred embodiments of the invention but not limitation for the invention, various modification and variations can be devised by those skilled in this art, and it should be understood that any modification, equivalent substitute and improvement devised without departing from the spirit and principle of the invention belong to the protection scope of the invention.

## Claims

1. A method for transmitting large message mode converged IP messaging (CPM), comprising:
when sending a large message mode CPM message to a CPM client of a receiver by a CPM client of a sender, sending a first session invitation message of the large message mode CPM message by the CPM client of the sender via a first SIP/IP core network to which the sender belongs, and receiving the first session invitation message by a first participating function entity to which the sender belongs;
sending a second session invitation message by the first participating function entity via the first SIP/IP core network and a second SIP/IP core network to which the receiver belongs, and receiving the second session invitation message by a second participating function entity to which the receiver belongs;
sending a third session invitation message by the second participating function entity via the second SIP/IP core network, and receiving the third session invitation message by the CPM client of the receiver;
performing a negotiation by the CPM client of the receiver with the CPM client of the sender to determine a media transmission link between the CPM client of the sender and the CPM client of the receiver;
sending content of the large message mode CPM message by the CPM client of the sender to the CPM client of the receiver via the determined media transmission link;
and initiating a flow to end the session of the large message mode CPM message by the CPM client of the sender or the CPM client of the receiver.

2. The method according to claim 1, wherein the performing a negotiation by the CPM client of the receiver with the CPM client of the sender comprises:
returning a third success response message by the CPM client of the receiver via the second SIP/IP core network, and receiving the third success response message by the second participating function entity;
returning a second success response message by the second participating function entity via the first and second SIP/IP core networks, and receiving the second success response message by the first participating function entity;
and returning a first success response message by the first participating function entity via the first SIP/IP core network, and receiving the first success response message by the CPM client of the sender.

3. The method according to claim 2, further comprising:
receiving the first success response message and sending a first acknowledge message via the first SIP/IP core network by the CPM client of the sender; receiving the first acknowledge message and sending a second acknowledge message via the first and second SIP/IP core networks by the first participating function entity; receiving the second acknowledge message and sending a third acknowledge message by the second participating function entity; and receiving the third acknowledge message by the CPM client of the receiver; or
receiving the third success response message and sending a third acknowledge message by the second participating function entity; receiving the third acknowledge message by the CPM client of the receiver; receiving the second success response message and sending a second acknowledge message by the first participating function entity via the first and second SIP/IP core networks; receiving the second acknowledge message by the second participating function entity; sending a first acknowledge message by the CPM client of the sender via the first and second SIP/IP core networks, and receiving the first acknowledge message by the first participating function entity.

4. The method according to claim 2, wherein the media transmission link comprises:
a first media transmission link located between the first participating function entity and
the CPM client of the sender, a second media transmission link located between the first participating function entity and the second participating function entity, and a third media transmission link located between the CPM client of the receiver and the second participating function entity; and determining the first media transmission link comprises:
establishing or selecting the first media transmission link located between the first participating function entity and the CPM client of the sender by the CPM client of the sender; or
establishing or selecting the first media transmission link located between the first participating function entity and the CPM client of the sender by the first participating function entity.

5. The method according to claim 4, wherein
in the case of establishing or selecting the first media transmission link by the CPM client of the sender, the determining the first media transmission link is triggered after the CPM client of the sender receives the first success response message;
in the case of establishing or selecting the first media transmission link by the first participating function entity, the determining the first media transmission link is triggered after the first participating function entity receives the first acknowledge message.

6. The method according to claim 4, wherein determining the second media transmission link comprises:
establishing or selecting the second media transmission link that is located between the first and second participating function entities by the first participating function entity; or
establishing or selecting the second media transmission link that is located between the second and first participating function entities by the second participating function entity.

7. The method according to claim 6, wherein
in the case of establishing or selecting the second media transmission link by the first participating function entity, the determining the second media transmission link is triggered after the first participating function entity receives the second success response message; and
in the case of establishing or selecting the second media transmission link by the second participating function entity, the determining the second media transmission link is triggered after the second participating function entity receives the second acknowledge message.

8. The method according to claim 6, wherein determining the third media transmission link comprises:
establishing or selecting the third media transmission link that is located between the CPM client of the receiver and the second participating function entity by the second participating function entity; or
establishing or selecting the third media transmission link that is located between the CPM client of the receiver and the second participating function entity by the CPM client of the receiver.

9. The method according to claim 8, wherein
in the case of establishing or selecting the third media transmission link by the second participating function entity, the determining the third media transmission link is triggered after the second participating function entity receives the third success response message;
and in the case of establishing or selecting the third media transmission link by the CPM client of the receiver, the determining the third media transmission link is triggered after the CPM client of the receiver receives the third acknowledge message.

10. The method according to any one of claims 4 to 9, wherein the first, second and third media transmission links are Message Session Relay Protocol (MSRP) transmission links.

11. The method according to claim 1, wherein the performing the negotiation between the CPM client of the receiver and the CPM client of the sender to determine the media transmission link comprises:
sending a third success response message by the CPM client of the receiver via the second SIP/IP core network, and receiving the third success response message by the second participating function entity;
sending a second success response message by the second participating function entity via the second and first SIP/IP core networks, and receiving the second success response message by the first participating function entity;
sending a first success response message by the first participating function entity via the first SIP/IP core network, and receiving the first success response message by the CPM client of the sender;
sending a first acknowledge message by the CPM client of the sender via the first SIP/IP core network, and receiving the first acknowledge message by the first participating function entity;
sending a second acknowledge message by the first participating function entity via the first and second SIP/IP core networks, and receiving the second acknowledge message by the second participating function entity;
sending a third acknowledge message by the second participating function entity via the second SIP/IP core network, and receiving the third acknowledge message by the CPM client of the receiver;
and establishing or selecting an end-to-end media transmission link between the CPM client of the receiver and the CPM client of the sender by the CPM client of the receiver.

12. The method according to claim 11, wherein sending the content of the large message mode CPM message to the receiver comprises:
sending the content of the large message mode CPM message by the CPM client of the sender to the CPM client of the receiver via the end-to-end media transmission link between the CPM client of the sender and the CPM client of the receiver;
and returning a reception response message by the CPM client of the receiver to the CPM client of the sender via the end-to-end media transmission link.

13. The method according to claim 2, wherein the first, second and third session invitation messages include a Session Description Protocol (SDP) session description parameter for a media negotiation.

14. The method according to claim 13, wherein the first, second and third session invitation messages further include service indication information for distinguishing a large message mode CPM message.

15. The method according to claim 14, wherein the service indication information is included in a parameter CPM Feature Tag in a field Accept-Contact of the session invitation message.

16. A system for transmitting large message mode Converged IP Messaging (CPM), comprising a CPM client of a sender and a CPM client of a receiver, wherein
the CPM client of the sender is arranged for establishing a media transmission link with the CPM client of the receiver via a session invitation of a large message mode CPM message and sending content of the large message mode CPM message to the CPM client of the receiver via the media transmission link;
and the CPM client of the receiver is arranged for receiving the session invitation of the large message mode CPM message, establishing the media transmission link according to the session invitation, and receiving the content of the large message mode CPM message sent by the CPM client of the sender via the media transmission link.

17. The system according to claim 16, wherein
the CPM client of the sender is further arranged for sending a first session invitation message of the large message mode CPM message via a first SIP/IP core network to which the sender belongs;
the system further comprises: a first participating function entity, to which the sender belongs, for receiving the first session invitation message and sending a second session invitation message via an SIP/IP core network; and a second participating function entity, to which a called party belongs, for receiving the second session invitation message and sending a third session invitation message via an SIP/IP core network;
and the CPM client of the receiver is further arranged for receiving the third session invitation message.

18. The system according to claim 17, wherein
the CPM client of the sender is further arranged for establishing a first media transmission link with the first participating function entity by interacting with the first participating function entity via the SIP/IP core network;
the first participating function entity is further arranged for establishing a second media transmission link with the second participating function entity by interacting with the second participating function entity through the SIP/IP core network;
and the second participating function entity is further arranged for establishing a third media transmission link with the CPM client of the receiver by interacting with the CPM client of the receiver through the SIP/IP core network.
